# FASCICULE DE BREVET EUROPEEN

(11) **EP 2 225 704 B1**
(45) Date de publication et mention de la délivrance du brevet: **19.06.2013**
(21) Numéro de dépôt: 08863168.4
(22) Date de dépôt: 16.12.2008
(51) Int. Cl.: G06K 19/073

(54) **SYSTEME AVERTISSEUR POUR SIGNALER LA PRESENCE D'UNE COMMUNICATION RADIOFREQUENCE ET PROCEDE DE FABRICATION**
WARNSYSTEM ZUM SIGNALISIEREN DER PRÄSENZ EINER FUNKKOMMUNIKATION UND HERSTELLUNGSVERFAHREN
WARNING SYSTEM TO SIGNAL THE PRESENCE OF RADIOFREQUENCY COMMUNICATION AND MANUFACTURING METHOD

(30) Priorité: 17.12.2007 EP 07301683
(43) Date de publication de la demande: 08.09.2010
(73) Titulaire: Gemalto SA, 92190 Meudon (FR)
(72) Inventeur: BUYUKKALENDER, Arek, F-13012 Marseille (FR); SEBAN, Frédérick, F-13260 Cassis (FR); MERIDIANO, Jean-Luc, F-83170 Tourves (FR)
(86) Numéro de dépôt international: PCT/EP2008/067587
(87) Numéro de publication internationale: WO 2009/077516

(56) Documents cités:
- EP-A- 1 457 915
- EP-A- 1 622 064
- EP-A- 1 814 066
- WO-A-2007/029325
- JP-A- 2003 211 086
- US-A1- 2003 173 408
- US-A1- 2005 287 961
- US-A1- 2006 131 375

## Description

L'invention concerne un dispositif de communication radiofréquence comportant des moyens avertisseurs de son fonctionnement sous l'effet d'un champ électromagnétique; Elle concerne aussi un système avertisseur en tant que tel pour signaler la présence d'une communication radiofréquence.

De tels dispositifs ou systèmes avertisseurs permettent de renseigner un porteur sur le déroulement d'une transaction mais aussi de l'avertir quand une activité est exercée à son insu sur son dispositif de communication tel qu'une carte de type radiofréquence à induction électromagnétique dans le but de pirater des informations ou des unités. D'autres dispositifs comprennent des indicateurs sonores constituant aussi l'interface de communication.

On connaît, par exemple, des cartes comportant des indicateurs sonores et interfaces tels des buzzers couramment utilisés notamment les cartes génératrices de signaux DTMF ou des indicateurs lumineux tel une diode émettrice de lumière (led). Ces indicateurs (leds) sont branchés sur un circuit électrique du dispositif, par exemple en série sur une antenne ou dans un module de carte à puce sans-contact.

Les indicateurs sonores ont l'inconvénient de ne pas être discret et de gêner l'environnement par exemple quand il s'agit, dans le domaine du transport, d'une porte d'accès sans-contact. D'autre part, cette solution ne convient pas aux malentendants. On outre, dans un environnement bruyant, l'avertisseur sonore peut ne pas être perceptible.

Les indicateurs lumineux, quant à eux, ne sont pas toujours perceptibles quand le dispositif est enfoui dans un sac ou portefeuille.

La demande de brevet européen EP 1 622 064 A2 décrit un appareil permettant d'avertir un utilisateur de la lecture d'une étiquette RFID notamment par l'intermédiaire d'un vibreur.

Les dispositifs visés en premier lieu par l'invention sont de préférence des cartes à puce de type sans-contact ou hybride, des inserts comportant une antenne radiofréquence ou le cas échéant, tout support de circuit d'antenne comme des passeports électroniques. De tels dispositifs à communication radiofréquence dits transpondeurs sans-contact, répondent notamment pour la plupart à la norme ISO-IEC 14443. La communication s'effectue de zéro à 10 cm voire jusqu'à un mètre. Des facteurs de forme autre que des cartes tels des clés USB peuvent être visés par l'invention. D'autres communications de proximité ou semi-proximité jusqu'à quelques centaines de mètres sont également visées. Les communications téléphoniques des téléphones mobiles ne sont pas visées à priori.

Un des problèmes soulevés par les dispositifs comportant des transpondeurs de type sans-contact visés par l'invention, et notamment pour des applications sensibles telles que carte bancaire, porte-monnaie électronique, e-passeport, cartes d'identité, provient du fait que le transpondeur, peut être interrogé par un lecteur distant, et cette opération peut être effectuée alors même que le porteur n'en est pas conscient.

L'invention a pour objectif de résoudre les inconvénients précités en permettant à l'utilisateur d'un dispositif de communication radiofréquence tel une carte de savoir de manière sensitive quand son dispositif communique.

A cet effet, l'invention consiste dans son principe de faire ressentir des vibrations à l'utilisateur pour lui indiquer la présence d'une communication radiofréquence.

L'invention a pour premier objet un système avertisseur selon la revendication 1.

Ainsi, l'utilisateur peut ressentir directement la présence de la communication radiofréquence lorsqu'il présente notamment à la main, le système à une borne sans contact ou qu'un lecteur est approché de lui à son insu.

Selon d'autres caractéristiques du système:
- les moyens d'activation comprennent, une bobine d'alimentation destinée à capter de l'énergie radiofréquence et fournir un courant induit alternatif, un circuit d'adaptation relié à la bobine, ledit circuit étant apte à fournir un signal alternatif basse fréquence au vibreur;
- le vibreur comprend un noyau magnétique mobile dans un tube et au moins une bobine d'excitation relié au circuit d'adaptation; Il est ainsi très simple à réaliser et peut être incorporé dans un corps peu épais comme une carte à puce.
- le vibreur comprend deux bobines d'excitation planes (en 2D) disposées aux deux extrémités du tube. Cela permet de faciliter la fabrication des bobines d'excitation en même temps que la bobine ou antenne et de gagner en encombrement dans l'épaisseur.

L'invention a également pour objet un dispositif de communication comprenant des moyens de communication radiofréquence, tel une carte à puce, un passeport, un insert, un téléphone mobile; Ce dispositif se distingue en ce qu'il comprend le système avertisseur ci-dessus.

Grâce à l'invention, on dispose d'un système avertisseur qui peut être au choix de l'utilisateur, lié ou structurellement indépendant ou coopérant avec le dispositif de communication. Le système a l'avantage de pouvoir déporté à un endroit plus sensible pour l'utilisateur tout en étant exposé à la communication, par exemple, dans une montre, un bracelet tandis que la carte sans-contact étant dans un sac, un portefeuille ou un téléphone mobile.

Selon d'autres caractéristiques du dispositif:
- le dispositif comprend un support plan tel un corps de carte, un substrat de document d'identité, le vibreur oscillant parallèlement au plan du support ou du substrat, permettant ainsi une amplitude d'oscillation optimisée dans une carte;
- le dispositif comprenant une antenne reliée à un module de circuit intégré, l'antenne constitue également la bobine d'alimentation du système avertisseur, permettant ainsi de simplifier le système et faciliter la fabrication;
- le dispositif constituant un appareil de communication téléphonique portable comportant un vibreur interne activable par appel téléphonique, le vibreur interne constitue également le vibreur du système avertisseur; Ainsi, l'utilisateur est averti de manière efficace avec un vibreur plus massif faisant vibrer l'ensemble même lorsque la carte de transaction sans contact ou autre objet est incorporée dans le mobile ou lui est associé; On fait aussi l'économie d'un vibreur.

L'invention a également pour objet deux procédés de fabrication d'un dispositif de communication comportant un système avertisseur décrit ci-dessus, selon les revendications 11 et 12.

D'autres particularités et avantages de l'invention apparaîtront à la lecture de la description, faite à titre d'exemple non limitatif et en regard des dessins annexés sur lesquels :
- La figure 1 illustre schématiquement un dispositif de communication radiofréquence comprenant un système ou circuit vibrant conforme à un mode de réalisation de l'invention permettant de le réaliser éventuellement seul de manière indépendante;
- La figure 2 illustre le schéma de principe simplifié du système vibrant selon un mode de réalisation;
- La figure 3 illustre un autre schéma de principe simplifié du système vibrant selon un second mode de réalisation;
- La figure 4 illustre un exemple de réalisation et/ou d'intégration du système vibrant conforme à l'invention dans un support ou insert prévu notamment pour carte à puce ou passeport électronique;
- La figure 5 illustre un exemple de réalisation d'une capsule vibrante électromagnétique pour système vibrant selon l'invention;
- Les figures 6 et 7 illustre un exemple de schéma de circuit électronique pour système vibrant selon l'invention;
- La figure 8 illustre un autre appareil de communication radiofréquence tel un téléphone portable intégrant un circuit vibrant conforme à une mode de réalisation de l'invention.
- La figure 9 décrit un support, éventuellement communiquant ou non, pour le système vibrant conforme à l'invention et permettant une association pratique avec un dispositif de communication, ici sous forme de carte à puce sans-contact RF ou combi-carte.

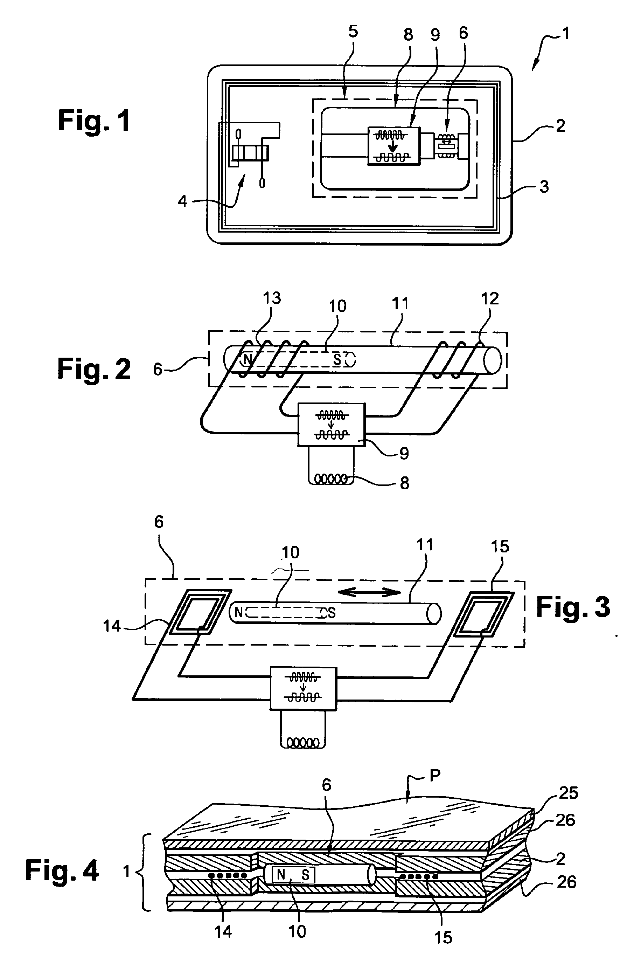

En relation avec la figure 1, un dispositif électronique de transaction radiofréquence 1 (ou produit sans-contact) est dans l'exemple sous forme d'une carte à puce ou support à puce de circuit intégré; Toutefois, d'autres formes de réalisations peuvent mettre en oeuvre ou comprendre les moyens de l'invention, telles qu'une clé USB ou tout autre objet portable de communication électromagnétique.

La carte comprend de manière connue un support ou corps de carte 2 comportant une antenne électromagnétique 3 dans le plan du support. Cette antenne est reliée aux bornes d'une puce de circuit intégré ou à celles d'un module électronique ou composant électronique 4 comportant une puce.

La puce est apte à mettre en oeuvre au moins une application logicielle mémorisée dedans pour réaliser une transaction électronique telle qu'un paiement bancaire, une opération de débit/crédit de points, d'unités, de fidélité, de contrôle d'accès, d'authentification, etc. L'application peut être mise en oeuvre par interaction avec un lecteur ou borne radiofréquence ou un autre dispositif du même genre que l'invention comportant une fonction de type NFC (Near field communication).

Le dispositif 1 peut comporter également un interrupteur apte à permettre un fonctionnement radiofréquence du dispositif sur actionnement de l'interrupteur et un arrêt de fonctionnement après relâchement de l'actionnement.

Le dispositif de communication 1 comporte un système avertisseur ou circuit vibrant 5 qui lui est associé et qui est décrit ci-après. Ce système est ici fixé sur le corps de carte mais peut être prévu de manière totalement indépendante sur un support distinct éventuellement insérable dans un logement correspondant du corps du dispositif ou vice versa. Le cas échéant, des moyens de fixation ou d'accouplement mécanique peuvent être prévus entre les deux, par exemple un adhésif.

Au sens de l'invention un dispositif de communication doit être entendu au sens large : il peut être par exemple réduit au système avertisseur car il est en mesure de signaler à lui seul une information de présence de champ magnétique. En outre, par modulation du champ (codage selon un code morse, etc...), la manière dont vibre le système avertisseur peut aussi permettre de donner une information par exemple codée à un utilisateur.

Le système avertisseur est conçu pour signaler la présence d'une communication radiofréquence ou champ radiofréquence RF. Dans l'exemple, le champ est dans la fréquence 13,56 Mhz conformément à la norme ISO-IEC 14443. D'autres applications de communication à des fréquences autres sont également possibles. De préférence, selon un mode préféré, l'énergie de la communication (du lecteur) doit permettre de générer l'énergie dont a besoin le système vibrant.

Selon une caractéristique, ce système comprend ou du moins est associé à un indicateur 6 de communication RF ou d'énergie RF, qui soit perceptible par un utilisateur par exemple dans la main ou à travers un portefeuille, voire dans une poche; le système comprend également des moyens d'activation 8, 9 qui sont aptes à capter de l'énergie provenant de cette communication ou champ RF; Ces moyens d'activation sont aptes à activer l'indicateur,

Selon l'invention, l'indicateur comprend un vibreur; il est ici de type électromagnétique ou électromécanique; Ce vibreur vibre ou oscille sous l'effet de courant induit et champ correspondant.

Le vibreur peut être tout moyen susceptible de provoquer des vibrations sensibles par l'utilisateur, par exemple, quand il tient le système en main. L'invention peut exclure à priori des buzzers type DTMF ou micro haut-parleurs qui génèrent des sons audibles aussi fort et aigus que des sonneries de téléphone. Par contre, le vibreur peut être aussi une membrane vibrante à une fréquence basse. Une capsule plate, la membrane oscillant perpendiculairement à un plan principal d'un support, la bobine d'excitation étant dans le plan principal du support.

Les fréquences visées par l'invention sont de préférence des fréquences non audibles. Par exemple, des fréquences inférieures à 1 K Hertz ou 500 Hertz, voire 100 Hertz peuvent convenir.

A la figure 2, selon un schéma de simplifié illustrant un premier exemple de réalisation, les moyens d'activation comprennent une bobine d'alimentation 8 destinée à capter de l'énergie radiofréquence et fournir un courant induit alternatif, suffisamment puissant pour activer l'indicateur de l'invention; Les moyens d'activation comprennent en outre un circuit d'adaptation 9 relié à la bobine 8; ce circuit est conçu ici pour fournir un signal alternatif de préférence basse fréquence au vibreur. La fréquence basse est liée au type de vibreur utilisé par l'invention dans l'application carte à puce notamment. De micro machines, par exemple tournantes sont également envisageables et ce éventuellement à d'autres fréquences.

Comme on utilise une mini-capsule d'épaisseur inférieure à 1 mm, le circuit d'adaptation est ici apte à diviser au moins par 1000, la fréquence de l'énergie captée pour obtenir une fréquence de vibration basse de valeur inférieure au seuil des 20Hz.

Le vibreur comprend un noyau mobile 10 (par exemple un aimant, ou pièce métallique tel une tige) dans un tube ou capsule 11 et au moins une bobine d'excitation 12, 13 reliée au circuit d'adaptation. La bobine 12 entoure le tube pour induire efficacement un champ électromagnétique axialement dans le tube et solliciter dynamiquement le noyau. Le vibreur comporte un mini-tube rigide résistant à la flexion du corps ou lui-même flexible et une pièce métallique apte à coulisser et taper alternativement aux deux extrémités du tube à chaque changement de phase.

A la figure 3, selon un autre mode de réalisation, le vibreur comprend deux bobines d'excitation planes 14, 15. Elles sont ici disposées aux deux extrémités du tube. Ce mode est avantageux pour la fabrication des bobines qui peut s'effecteur en même temps que la bobine d'alimentation 8. Le cas échéant, la bobine n'est pas indispensable, l'énergie étant collectée par les bobines d'excitation 14 et/ou 15.

A la figure 4 est illustré un insert avertisseur pour être incorporé dans un dispositif de communication comportant des moyens de communication radiofréquence, tels une carte à puce, un passeport, voire un téléphone mobile comme indiqué par la suite.

L'insert comprend un corps formant un support plan P comme un corps de carte, un substrat de document d'identité etc. Le vibreur 6 ou du moins le noyau ou tige 10 oscille ici parallèlement au plan du support ou du substrat pour permettre plus d'amplitude au mouvement et plus d'inertie que dans une direction perpendiculaire au plan. La capsule 11 a une dimension allant de 5 à 10 mm et une épaisseur de 0, 5mm. La capsule est disposée dans une cavité ménagée dans les feuilles 2, 26; Deux feuilles de couvertures 25, 27 facultatives peuvent fermer la cavité.

Eventuellement, le noyau ou des billes sont disposées sans capsule directement dans une cavité du corps. Des masses métalliques sont fixées aux extrémités de la cavité pour taper contre le noyau mobile.

Selon un mode de réalisation avantageux, le dispositif comprenant déjà une antenne 3 reliée à un module de circuit intégré 4, on prévoit d'utiliser cette antenne pour constituer également la bobine d'alimentation du système avertisseur. Cela permet d'avoir une seule et unique antenne, branchée par exemple, en parallèle sur le module 4 et le circuit d'adaptation 9. L'antenne peut être adaptée de manière à tenir compte de l'impédance additionnelle du circuit avertisseur.

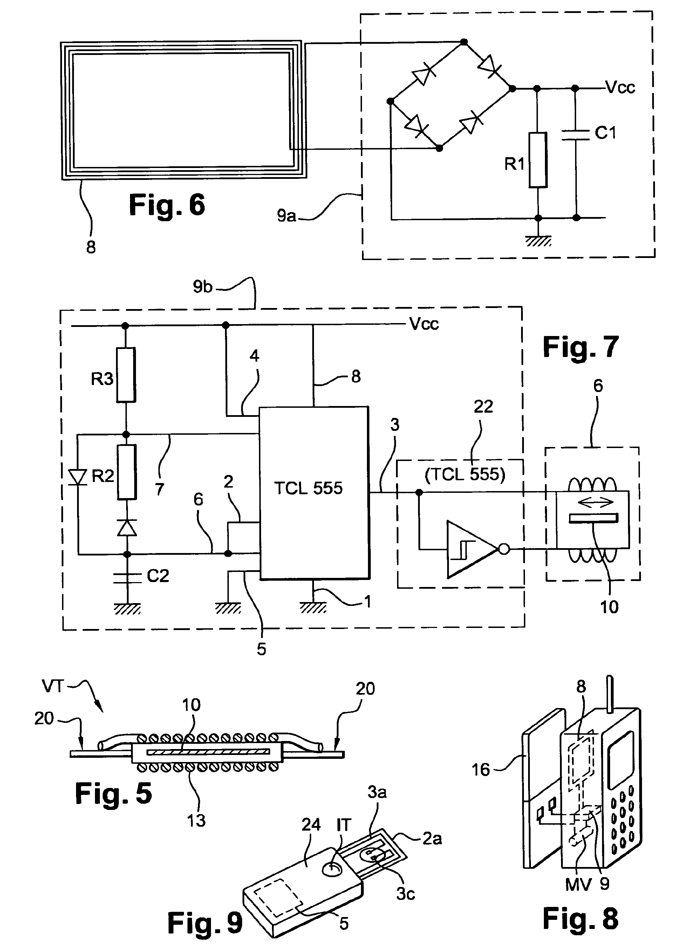

A la figure 8, le système avertisseur est incorporé dans un appareil de communication constituant un téléphonique portable.
Selon un mode avantageux, le vibreur interne MV du téléphone mobile ou autre indicateur qui généralement est activable par appel téléphonique, est utilisé en complément ou constitue le vibreur 6 du système avertisseur.
Cela permet d'utiliser le vibreur ou tout indicateur déjà en place évidemment beaucoup plus puissant et perceptible que celui incorporé dans une carte. Un circuit de couplage ou d'adaptation peut être prévu entre l'indicateur utilisé du mobile et un système sensible apte à détecter ou capter une communication, RF par exemple.

Le vibreur MV peut être connecté de différentes manières au système sensible de l'invention. Dans une variante, l'antenne peut capter un champ et activer par le courant induit un relais (non représenté) qui va brancher la batterie au vibreur.

Dans une autre variante, l'antenne peut capter de l'énergie qui va, comme décrit ci-précédemment, permettre d'alimenter à travers un circuit d'adaptation ou un contrôleur d'alimentation, le vibreur interne de l'appareil et/ou le vibreur du système.

L'antenne étant notamment prévue pour une communication de type NFC, elle est montée sur les plots C4, C8 d'une puce duale (ISO7816.3 et sans-contact NFC). D'autres communications du type "wifi" ou "bluetooth" intégrant une ou des fonctions sans contact et/ou ISO 7816.3 sont envisageables. Comme exemple de fonctionnement, la fonction NFC étant sollicité, par détection dans la puce de trames de type sans-contact, une interruption du processeur de la puce est provoquée de manière à envoyer un signal ou une commande au mobile pour activer le vibreur à partir notamment de la batterie de l'appareil hôte ou à partir de l'énergie radiofréquence captée.

L'antenne peut aussi être également reliée à une puce de type NFC qui est reliée au terminal et/ou à une carte SIM. Sur détection de la communication RF par la puce NFC, début, en cours ou fin de transaction, un signal de commande ou d'activation d'un indicateur est envoyé au terminal pour actionner sur un indicateur (sonnerie, vibreur, lumière). Le cas échéant, le champ RF fournit, notamment via la puce NFC, l'énergie aux indicateurs du mobile.

A la figure 9, le cas échéant, tout ou partie des moyens du système avertisseur peuvent être inclus dans un étui portable 24 ou objet équivalent hôte. Une carte sans-contact 2a (dispositif de communication) et/ou le système avertisseur 5 peuvent être glissés tous deux ou être inclus ou faire partie de l'étui (comme organe de réception ou de rassemblement). L'étui, le cas échéant, peut comprendre notamment une antenne de communication ou bobine du système avertisseur et/ou de la carte. L'étui peut comporter une source d'alimentation supplémentaire et/ou une antenne relais passive pour augmenter la portée ou amplifier le signal radiofréquence. Dans ce dernier cas, la fonction sans-contact peut être réalisée dans un module à puce de type module antenne, lequel est encarté dans le corps de carte, l'antenne relais étant dans l'étui.

Dans un mode préféré, le système avertisseur 5 comme accessoire se trouve dans des parois de l'étui ou glissé en même temps que la carte dans l'étui. En fait, c'est le système avertisseur qui comporte un logement d'insertion ou des moyens de fixation de la carte sans contact.

L'étui peut comporter comme indiqué une batterie qui va permettre en étant branchée à des contacts d'alimentation d'une puce sans contact d'augmenter notamment la portée d'une communication et/ou alimenter le vibreur. Un interrupteur IT peut être le cas échéant disposé sur l'étui pour permettre la communication, notamment en fermant un circuit d'antenne 3a ayant des contacts 3c ou en supprimant un court-circuit inhibant le fonctionnement.

Le cas échéant, le bouton de l'étui (IT) permet de fermer à la fois le circuit de l'antenne de la carte et celui de la bobine du système, ce qui autorise un fonctionnement simultané des deux sous l'effet d'une communication.

Selon une autre variante, on peut prévoir un opto-coupleur en série sur le circuit d'antenne du transpondeur de transaction (tel que transport, paiement, etc.). Cet opto-coupleur ferme un circuit d'alimentation du vibreur lorsque le transpondeur est actif dans un champ RF. Le circuit d'alimentation peut être une bobine ou une source quelconque telle une batterie.
via un composant de type opto-coupleur (isolation électrique afin de ne pas pénaliser l'impédance globale du transpondeur
Tout où partie de l'énergie d'activation du vibreur peut provenir soit de la batterie, soit de l'antenne, soit des deux selon l'état de la batterie ou un mode d'économie d'énergie de l'un et/ou de l'autre objet associé. Un contrôleur de l'énergie prévu dans la puce de l'objet de communication sans-contact ou dans le mobile, sélectionne les énergies disponibles en fonction notamment de leur niveau. L'étui ou objet similaire peut comprendre d'autres moyens de communication ou une interface de communication pour la carte à puce comme un adaptateur ou connecteur USB, une interface IHM (clavier, afficheur), etc.

La fabrication d'un dispositif de communication 1 comportant un système avertisseur, peut comprendre les étapes réalisées de deux manières ci-après.
Selon une première mise en oeuvre, le procédé comprend les étapes suivantes selon lesquelles:
- on réalise au moins une bobine d'alimentation 8 et au moins une bobine d'excitation 12, 13 sur une feuille support 2, notamment par incrustation ou broderie de fils conducteurs;
- on reporte et fixe un vibreur électromagnétique 6 dans une cavité ménagée dans la feuille 2,
- on dispose un circuit d'adaptation 9 dans un module d'adaptation (composant électronique sur un substrat isolant portant des plots ou plages de contact) que l'on reporte dans une cavité ménagée dans la feuille et que l'on connecte aux bornes de la bobine d'alimentation 8.

Des feuilles de recouvrement de l'antenne 26 et/ou de la capsule (25, 27) peuvent être laminées par dessus. Une résine peut aussi venir combler le logement de la capsule.

Selon une autre mise en oeuvre, le procédé comprend les étapes suivantes selon lesquelles:
- on réalise au moins une bobine d'alimentation 8 sur une feuille support 2
- on reporte un vibreur électromagnétique tubulaire 6 comportant une bobine d'excitation VT concentrique et des plages de connexion 20 dans une cavité ménagée dans la feuille,
- on dispose un circuit d'adaptation 9 dans un module d'adaptation (non illustré), (par exemple, comme un module de carte à puce sans-contact) que l'on reporte dans une autre cavité ménagée dans la feuille et que l'on connecte aux bornes de la bobine d'alimentation 8.

Des feuilles de décoration ou de recouvrement peuvent recouvrir l'ensemble.

Les feuilles supports ainsi réalisées peuvent être adjointes ou intégrées à d'autres composants notamment des composants ou dispositif de communication radiofréquence, transpondeurs RFID, etc. La même feuille peut aussi recevoir ces composants.

A la figure 6, la bobine d'alimentation 8 du système est reliée à un circuit d'adaptation 9 adaptant de l'énergie reçue aux besoins du vibreur. Le circuit d'adaptation comprend un pont redresseur 9a du courant induit pour réaliser une alimentation stabilisée Vcc pour alimenter les composants. Le circuit 9 comprend également un diviseur de fréquence 9b disposé en sortie du pont redresseur. Une fois le signal récupéré par la bobine, le pont redresseur permet de réaliser une alimentation stabilisée Vcc.

Le circuit d'adaptation comprend aussi un diviseur de fréquence 9b; Il est de préférence apte à diviser au moins par 1000 la fréquence de l'énergie captée, pour obtenir une fréquence de vibration basse de valeur inférieure au seuil des 20Hz. Dans l'exemple, les valeurs de composants sont choisies de manière à obtenir sur la sortie 3 un signal alternatif de fréquence égale à 3Hz.

La polarité du signal est changée par un inverseur 22 aux bornes de la bobine d'excitation 6 du vibreur, (ici très schématisée) pour faire osciller la ferrite 10 située à l'intérieur de celle-ci.

Il peut être prévu des moyens de gestion de la transaction à effecteur avec le dispositif de communication, pour avertir non seulement de la présence mais aussi du début ou la fin d'une transaction. Les moyens de gestion peuvent être prévus pour déclencher un signal de la puce à destination de mobile à la fin de la transaction ou en cas d'échec de la transaction. L'échec ou le succès ou l'état d'une transaction, peut être signalé à l'utilisateur, via le système avertisseur, par un ou plusieurs trains de vibrations selon une convention déterminée. La fréquence peut aussi être modifiée selon une convention ou mode choisie pour avertir l'utilisateur.

## Revendications

1. Système avertisseur (5) pour signaler la présence d'une communication radiofréquence, ledit système comprenant un indicateur perceptible par un utilisateur et des moyens d'activation (8, 9) configuré pour capter ou détecter de l'énergie provenant de ladite communication et activer ledit indicateur, l'indicateur (6) comprenant un vibreur, **caractérisé en ce que** les moyens d'activation comprennent un diviseur de fréquence (9b) apte à diviser la fréquence de l'énérgie radiofréquence captée.

2. Système selon l'une des revendications 1 ou 2, **caractérisé en ce que** les moyens d'activation comprennent :
- une bobine d'alimentation (8) destinée à capter de l'énergie radiofréquence et fournir un courant induit alternatif,
- un circuit d'adaptation (9) et comprenat le diviseur de fréquence relié à la bobine ledit circuit étant configuré pour fournir un signal alternatif basse fréquence au vibreur.

3. Système selon l'une des revendications 1 ou 2, **caractérisé en ce que** circuit d'adaptation (9) est configuré pour diviser au moins par 1000, la fréquence de l'énergie captée pour obtenir une fréquence de vibration basse de valeur inférieure au seuil des 20Hz.

4. Système selon l'une des revendications précédentes, **caractérisé en ce que** le vibreur comprend un noyau mobile (10) dans un tube (11) et au moins une bobine d'excitation (12, 13) reliée au circuit d'adaptation.

5. Système selon l'une des revendications précédentes, **caractérisé en ce que** le vibreur comprend deux bobines d'excitation planes (14, 15) disposées aux deux extrémités du tube.

6. Dispositif de communication comportant des moyens de communication radiofréquence, tel une carte à puce, un passeport, un insert, un téléphone mobile, un étui communiquant, **caractérisé en ce qu'**il comprend le système avertisseur (5) selon l'une quelconque des revendications précédentes.

7. Dispositif selon la revendication 6, **caractérisé en ce qu'**il comprend un support plan tel un corps de carte, un substrat de document d'identité, le vibreur oscillant parallèlement au plan (P) du support ou du substrat.

8. Dispositif selon la revendication 6, **caractérisé en ce que** système avertisseur est indépendant structurellement des moyens de communication radiofréquence.

9. Dispositif selon la revendication 6, comprenant une antenne (3) reliée à un module de circuit intégré, **caractérisé en ce que** l'antenne (3) constitue également la bobine d'alimentation (8) du système avertisseur.

10. Dispositif selon la revendication 2, constituant un appareil de communication téléphonique portable comportant un vibreur interne (MV) activable par appel téléphonique, **caractérisé en ce que** le vibreur interne constitue également le vibreur du système avertisseur.

11. Procédé de fabrication d'un dispositif de communication comportant ou constituant un système avertisseur pour signaler la présence d'une communication radiofréquence, **caractérisé en ce qu'**il comprend les étapes suivantes :
- réalisation d'au moins une bobine d'alimentation, destinée à capter de l'énergie radiofréquence, (8) et au moins une bobine d'excitation (14, 15) sur une feuille support (2),
- report et fixation d'un vibreur électromagnétique (11) dans une cavité ménagée dans la feuille (2),
- disposition d'un circuit d'adaptation (9) dans un module d'adaptation que l'on reporte dans une cavité ménagée dans la feuille et que l'on connecte aux bornes de la bobine d'alimentation (8), ledit circuit d'adaptation comprenant un diviseur de fréquence apte à diviser la fréquence de l'énergie radiofréquence captée et étant configuré pour fournir un signal alternatif basse fréquence au vibreur.

12. Procédé de fabrication d'un dispositif de communication comportant ou constituant un système avertisseur pour signaler la présence d'une communication radiofréquence, **caractérisé en ce qu'**il comprend les étapes suivantes :
- réalisation d'au mnins une bobine d'alimentation destinée à capter de l'énergie radiofréquence, sur une feuille support (2), la
- report d'un vibreur électromagnetique tubulaire comportant une bobine d'excitation concentrique (VT) et des plages de connexion (20) dans une cavité ménagée dans la feuille,
disposition d'un circuit d'adaptation (9) dans un module d'adaptation que l'on reporte dans une cavité ménagée dans la feuille (2) et que l'on connecte aux bornes de la bobine d'alimentation (8), ledit circuit d'adaptation comprenant un diviseur de fréquence apte à diviser la fréquence de l'énergie radiofréquence captée et étant configuré pour fournir un signal alternatif basse fréquence au vibreur.

## Patentansprüche

1. Warnsystem (5) zur Meldung des Vorhandenseins einer Funkfrequenzkommunikation, wobei das genannte System einen Indikator umfasst, der von einem Nutzer wahrnehmbar ist, und Aktivierungsmittel (8, 9), die konfiguriert sind, um die Energie zu erfassen oder festzustellen, die von der genannten Kommunikation stammt, und zur Aktivierung des genannten Indikators, wobei der Indikator (6) einen Vibrator umfasst, **dadurch gekennzeichnet, dass** die Aktivierungsmittel einen Frequenzteiler (9b) umfassen, der geeignet ist, die Frequenz der erfassten Funkfrequenzenergie zu teilen:

2. System gemäß Anspruch 1 oder 2, **dadurch gekennzeichnet, dass** die Aktivierungsmittel umfassen:
- eine Versorgungsspule (8), die zur Erfassung der Funkfrequenzenergie und zur Lieferung eines Induktionswechselstroms bestimmt ist,
- einen Anpassungsschaltkreis (9), der an die Spule angeschlossen ist und den Frequenzteiler umfasst, wobei der genannte Schaltkreis konfiguriert ist, um ein alternatives Niedrigfrequenzsignal zu liefern.

3. System gemäß Anspruch 1 oder 2, **dadurch gekennzeichnet, dass** der Anpassungsschaltkreis (9) konfiguriert ist, um die Frequenz der erfassten Energie mindestens durch 1000 zu teilen, um eine Vibration mit niedriger Frequenz mit einem Wert unterhalb des Schwellenwertes von 20 Hz zu erhalten.

4. System gemäß einem der voranstehenden Ansprüche, **dadurch gekennzeichnet, dass** der Vibrator einen mobilen Kern (10) in einer Röhre (11) und wenigstens eine Erregerspule (12, 13), die an den Anpassungsschaltkreis angeschlossen ist, umfasst.

5. System gemäß einem der voranstehenden Ansprüche, **dadurch gekennzeichnet, dass** der Vibrator zwei flache Erregerspulen (14, 15) umfasst, die an den zwei Enden der Röhre angeordnet sind.

6. Kommunikationsvorrichtung, umfassend Funkfrequenzkommunikationsmittel, wie z. B. eine Chipkarte, einen Pass, einen Einsatz, ein Mobiltelefon, ein kommunizierendes Etui, **dadurch gekennzeichnet, dass** sie das Warnsystem (5) gemäß einem der voranstehenden Ansprüche umfasst.

7. Vorrichtung gemäß Anspruch 6, **dadurch gekennzeichnet, dass** sie einen ebenen Träger umfasst, wie z . B . **einen Kartenkörper,** e i n Ausweispapiersubstrat, wobei der Vibrator parallel zur Ebene (P) des Trägers oder des Substrats schwingt.

8. Vorrichtung gemäß Anspruch 6, **dadurch gekennzeichnet, dass** das Warnsystem strukturell von den Funkfrequenzkommunikationsmitteln unabhängig ist.

9. Vorrichtung gemäß Anspruch 6, umfassend eine an ein integriertes Schaltkreismodul angeschlossene Antenne (3), **dadurch gekennzeichnet, dass** die Antenne (3) ebenfalls die Versorgungsspule (8) des Warnsystems bildet.

10. Vorrichtung gemäß Anspruch 2, die ein tragbares telefonisches Kommunikationsgerät bildet, umfassend einen internen Vibrator (MV), der per Telefonanruf aktivierbar ist, **dadurch gekennzeichnet, dass** der interne Vibrator ebenfalls den Vibrator des Warnsystems bildet.

11. Herstellungsverfahren einer Kommunikationsvorrichtung, umfassend oder bildend ein Warnsystem zur Meldung des Vorhandenseins einer Funkfrequenzkommunikation, **dadurch gekennzeichnet, dass** es die folgenden Stufen umfasst:
- Realisierung wenigstens einer Versorgungsspule (8), die zur Erfassung der Funkfrequenzenergie bestimmt ist, und wenigstens einer Erregerspule (14, 15) auf einer Trägerfolie (2),
- Übertragung und Befestigung eines elektromagnetischen Vibrators (11) in einer in der Folie (2) ausgesparten Ausnehmung,
- Anordnung eines Anpassungsschaltkreises (9) in einem Anpassungsmodul, das in eine in der Folie ausgesparten Ausnehmung übertragen wird und das an die Anschlüsse der Versorgungsspule (8) angeschlossen wird, wobei der genannte Anpassungsschaltkreis, umfassend einen Frequenzteiler, der geeignet ist, die Frequenz der erfassten Funkfrequenzenergie zu teilen und konfiguriert ist, um dem Vibrator ein alternatives Funkfrequenzsignal zu liefern.

12. Herstellungsverfahren einer Kommunikationsvorrichtung, umfassend oder bildend ein Warnsystem zur Meldung des Vorhandenseines einer Funkfrequenzkommunikation, **dadurch gekennzeichnet, dass** es die folgenden Stufen umfasst:
- Realisierung wenigstens einer Versorgungsspule, die zur Erfassung der Funkfrequenzenergie bestimmt ist, auf einer Trägerfolie (2),
- Übertragung eines röhrenförmigen elektromagnetischen Vibrators, umfassend eine konzentrische Erregerspule (VT) und Anschlussbereiche (20) in einer in der Folie ausgesparten Ausnehmung,
Anordnung eines Anpassungsschaltkreises (9) in einem Anpassungsmodul, das in eine in der Folie (2) ausgesparte Ausnehmung übertragen wird und das an die Anschlüsse der Erregerspule (8) angeschlossen wird, wobei der genannte Anpassungsschaltkreis, umfassend einen Frequenzteiler, der zur Teilung der Frequenz der erfassten Funkfrequenzenergie geeignet ist, und konfiguriert ist, um dem Vibrator ein alternatives Funkfrequenzsignal zu liefern.

## Claims

1. A warning system (5) for signalling the presence of a radio frequency communication, said system comprising an indicator perceptible to a user and activation means (8, 9) adapted to sense or detect energy originating from said communication and to activate said indicator, with the indicator (6) comprising a vibrator, **characterized in that** the activation means comprises a frequency divider (9b) able to divide the frequency of the collected radio frequency energy.

2. A system according to one of claims 1 or 2, **characterized in that** the activation means comprises:
- a supply coil (8) intended for collecting radio frequency energy and supplying an alternating induced current,
- a matching circuit (9) connected to the coil, and comprising the frequency divider, with said circuit being so configured as to provide the vibrator with a low-frequency AC signal.

3. A system according to one of claims 1 or 2, **characterized in that** the matching circuit (9) is so configured as to divide by at least 1000, the frequency of the collected energy to obtain a low vibration frequency of less than the threshold value of 20Hz.

4. A system according to one of the preceding claims, **characterized in that** the vibrator comprises a moving core (10) in a tube (11) and at least one energizing coil (12, 13) connected to the matching circuit.

5. A system according to one of the preceding claims, **characterized in that** the vibrator comprises two flat energizing coils (14, 15) positioned at both ends of the tube.

6. A communication device comprising radio frequency communication means, such as a chip card, a passport, an insert, a mobile telephone, a communicating case, **characterized in that** it includes the warning system (5) according to any one of the previous claims.

7. A device according to claim 6, **characterized in that** it comprises a flat support such a card body, a substrate of an identity document, with the vibrator oscillating parallel to the plane (P) of the support or of the substrate.

8. A device according to claim 6, **characterized in that** the warning system is structurally independent of the radio frequency communication means.

9. A device according to claim 6, comprising an antenna (3) connected to an integrated circuit module, **characterized in that** the antenna (3) also forms the supply coil (8) of the warning system.

10. A device according to claim 2, forming a portable telephone communication device comprising a telephone-actuated internal vibrator (MV), **characterized in that** the internal vibrator also forms the vibrator of the warning system.

11. A method for manufacturing a communication device comprising or forming a warning system, for signalling the presence of a radio frequency communication, **characterized in that** it comprises the following steps:
- providing at least one supply coil (8) intended for collecting radio frequency energy and at least one energizing coil (14, 15) on a carrier sheet (2),
- transferring and fixing an electromagnetic vibrator (11) in a cavity formed in the sheet (2),
- positioning a matching circuit (9) in a matching module that is transferred into a cavity arranged in the sheet and which is connected to the terminals of the supply coil (8), with said matching circuit comprising a frequency divider able to divide the frequency of the collected radio frequency energy and being so configured as to provide the vibrator with a low frequency alternating signal.

12. A method for manufacturing a communication device comprising or forming a warning system for signalling the presence of a radio frequency communication, **characterized in that** it comprises the following steps:
- providing at least one supply coil intended for collecting radio frequency energy on a carrier sheet (2)
- transferring a tubular electromagnetic vibrator comprising a concentric energizing coil (VT) and pads (20) in a cavity arranged in the sheet,
- positioning a matching circuit (9) in a matching module that is transferred into a cavity arranged in the sheet (2) and which is connected to the terminals of the supply coil (8), with said matching circuit comprising a frequency divider able to divide the frequency of the collected radio frequency energy and being so configured as to provide the vibrator with a low frequency alternating signal.
